# EUROPÄISCHE PATENTSCHRIFT

(11) **EP 2 567 094 B1**
(45) Veröffentlichungstag und Bekanntmachung des Hinweises auf die Patenterteilung: **25.07.2018**
(21) Anmeldenummer: 10785340.0
(22) Anmeldetag: 16.11.2010
(51) Int. Cl.: F04B 43/00, F04B 43/02, F16J 3/02

(54) **MEMBRANPUMPE**
DIAPHRAGM PUMP
POMPE À MEMBRANE

(30) Priorität: 27.02.2010 DE 102010009670
(43) Veröffentlichungstag der Anmeldung: 13.03.2013
(73) Patentinhaber: KNF Neuberger GmbH, 79112 Freiburg (DE)
(72) Erfinder: BECKER, Erich, 79189 Bad Krozingen (DE); HAUSER, Erwin, 79312 Emmendingen (DE)
(74) Vertreter: Maucher Jenkins Patent- und Rechtsanwälte
(86) Internationale Anmeldenummer: PCT/EP2010/006968
(87) Internationale Veröffentlichungsnummer: WO 2011/103890

(56) Entgegenhaltungen:
- EP-A2- 1 058 005
- EP-A2- 1 460 270
- DE-A1- 2 713 599
- DE-U1- 9 403 103
- US-A- 5 634 391
- US-A- 5 791 882

## Beschreibung

Die Erfindung betrifft eine Membranpumpe, die in zumindest einem Pumpenkopf eine Arbeits- oder Pumpmembrane hat, welche mit einer an ihrem Außenumfang angeordneten Einspannzone zwischen zwei Gehäuseteilen eines Pumpengehäuses eingespannt ist und zwischen sich und einem Pumpenkopfteil einen Arbeits- oder Förderraum umgrenzt, deren benachbart zur Einspannzone angeordnete Ringzone als eine in unbelastetem Zustand der Arbeits- oder Pumpmembrane konvex gewölbte und in den Arbeits- oder Förderraum vorstehende Führungszone ausgebildet ist, und die in einer Zentralzone einen Membrananker umschließt, welcher auf seiner, dem Arbeits- oder Förderraum des zumindest einen Pumpenkopfes abgewandten Seite mit einem Hubantrieb verbunden ist, der zur oszillierenden Hubbewegung der Arbeits- oder Pumpmembrane vorgesehen ist, wobei sich die Arbeits- oder Pumpmembrane mit ihrer Führungszone während der Hubbewegung: der Arbeits- oder Pumpmembrane an einer komplementär geformten Ring- oder Stützzone des Pumpenkopfes abwälzt, wobei zwischen der Führungszone und der Zentralzone eine in unbelastetem Zustand demgegenüber konkav und in Richtung zum unteren Totpunkt durchgebogene Ausgleichszone der Arbeits- oder Pumpmembrane vorgesehen ist, und wobei die Ausgleichszone beim Aufwärtshub eine Streckung erfährt, so dass die Ausgleichszone im oberen Totpunkt straff gespannt ist.

Vorbekannte Membranpumpen weisen zumindest einen Pumpenkopf auf, dem eine Arbeits- oder Pumpenmembrane zugeordnet ist. Der äußere Umfangsrandbereich dieser Arbeits- oder Pumpmembrane ist als Einspannzone ausgebildet, mit der die Arbeits- oder Pumpmembrane derart zwischen zwei Gehäuseteilen des Pumpengehäuses eingespannt ist, dass die Arbeits- oder Pumpmembrane zwischen sich und einem Pumpenkopfteil einen Arbeits- oder Förderraum umgrenzt. In einer zentralen Membranzone ist ein metallener Membrananker bereichsweise einvulkanisiert, der auf seiner, dem Arbeits- oder Förderraum abgewandten Seite mit einem Hubantrieb verbunden ist. Mit Hilfe dieses Hubantriebes kann die Arbeits- oder Pumpmembrane des zumindest einen Pumpenkopfes in eine oszillierende Hubbewegung versetzt werden.

Als Arbeits- oder Fördermembrane sind bereits verschiedene Membranausführungen vorbekannt. So vermag sich die sogenannte Formmembrane im oberen Totpunkt der Hubbewegung formschlüssig an den kalottenförmigen Arbeits- oder Förderraum der zugeordneten Membranpumpe anzulegen. Derartige Arbeits- oder Pumpmembranen müssen einerseits ausreichend elastisch ausgestaltet sein, um den durch die Walkbewegung der Membrane während des Pumpenbetriebes auf sie einwirkenden Kräften standzuhalten; gleichzeitig müssen diese Arbeits- oder Pumpmembranen auch ausreichend formstabil sein, um nicht durch die während des Pumpenbetriebes auf die gegenüberliegenden Membranseiten einwirkenden gegensätzlichen Druckkräfte leistungsmindernd verformt zu werden. Man hat daher auch sogenannte Strukturmembranen geschaffen, die auf ihrer dem Arbeits- oder Pumpraum abgewandten Membranseite durch konzentrische Stege und radiale Rippen gebildete Strukturen aufweisen, welche eine definierte Walkbewegung der Strukturmembrane während des Pumpbetriebes erlauben.

Aus der DE 27 13 599 A1 ist bereits eine Membranpumpe der eingangs erwähnten Art vorbekannt, die in ihrem Pumpenkopf eine Pumpmembrane hat, welche mit einer an ihrem Außenumfang angeordneten Einspannzone zwischen zwei Gehäuseteilen den Pumpengehäuses eingespannt ist und zwischen sich und einem Pumpenkopfteil einen Arbeitsraum umgrenzt. Die Pumpmembrane der vorbekannten Membranpumpe weist eine Zentralzone auf, die einen Membrananker umschließt, welcher auf seiner dem Arbeitsraum des Pumpenkopfes abgewandten Seite mit einem Hubantrieb verbunden ist, der zu oszillierenden Hubbewegungen der Pumpmembrane vorgesehen ist. Die Pumpmembrane der vorbekannten Membranpumpe weist in entspanntem Zustand eine im wesentlichen plane Form auf (Seite 21, Zeile 9 der DE 27 13 599 A1), in der über die Einspann- und die Zentralzone hinaus keine weiteren Membranzonen ausgeprägt sind.

Die Membrane in der aus DE 27 13 599 A1 vorbekannten Membranpumpe wird aber derart zwischen den Gehäuseteilen des Pumpengehäuses verspannt, dass sich benachbart zur Einspannzone eine nach oben ragende bogenförmige Eindrückung bildet, die eine längere Betriebslebensdauer der Membrane gewährleisten soll. Gegenüber der bogenförmig gewölbten Eindrückung der Membrane weist das Pumpengehäuse eine konvexe Einformung auf. Wie aus der Figur 5 in DE 27 13 599 A1 deutlich wird, welche die vorbekannte Membranpumpe in einem Detail-Längsschnitt unmittelbar vor dem oberen Totpunkt zeigt, liegt die bogenförmige Eindrückung nicht an der konvexen Einformung des Pumpengehäuses an, sondern weist einen geringfügigen Abstand auf. Zwischen der bogenförmig gewölbten Eindrückung und der Zentralzone bildet sich eine konkave und in Richtung zum Hubantrieb gewölbte der Ausgleichszone aus.

Aus der US 5.634.391 (= EP 818 627 A2) und der im internationalen Verfahren entgegengehaltenen EP 1 058 005 A2 sind bereits Membranpumpen vorbekannt, die eine Arbeits- oder Pumpmembran mit einer zentralen Membranzone haben, welche vergleichsweise dick und unnachgiebig ausgestaltet ist und einen Membrananker in sich aufnimmt. An diese zentrale Membranzone schließt sich in Richtung nach außen eine demgegenüber dünne und entsprechend flexible Ringzone an, die bogenförmig in Richtung zum Arbeitsraum gewölbt ist. Am Außenumfang der vorbekannten Membranen ist jeweils eine im Querschnitt kreisrunde Membranverdickung vorgesehen, mit der die Arbeits- oder Pumpmembranen dicht zwischen zwei Gehäuseteilen der vorbekannten Membranpumpen eingespannt werden können. Um die dem Arbeitsraum zugewandte Membranoberfläche gegen äußere Einflüsse zu schützen, ist diese dem Arbeitsraum zugewandte Membranoberfläche mit einer gleichmäßig dünnen Schicht aus inertem Material versehen. In der US 5.634.391 A (= EP 818 627 A2) und der EP 1 058 005 A2 ist nicht zu entnehmen, ob und inwieweit sich die dort verwendeten Arbeits- oder Pumpmembranen am Pumpenkopf der vorbekannten Membranpumpen abwälzen sollen. Des Weiteren geht die bogenförmig gewölbte Ringzone der vorbekannten Membranen unmittelbar in die unflexible zentrale Membranzone über. Dabei wird eine Streckung der vorbenannten Membranen allein: in der bogenförmig gewölbten Ringzone erreicht.

Aus der EP 1 460 270 A1 ist eine druckluftbetriebene DoppelMembranpumpe mit zwei Arbeitsmembranen vorbekannt, die jeweils einen Arbeits- oder Pumpraum von einer Luftkammer trennen. Durch Einleitung von Druckluft in eine der Luftkammern kann die benachbarte Arbeits- oder Pumpmembrane derart in Richtung zum Pumpraum verdrängt und dadurch der Pumpraum verkleinert werden, dass im Pumpraum befindliches Fluid durch einen Auslass befördert wird. Auch die beiden Arbeits- oder Pump-Membranen der vorbekannten DoppelMembranpumpe weisen eine bogenförmig in Richtung zum Arbeits- oder Pumpraum gewölbte Ringzone auf, die zwischen einer äußeren Einspannzone und einem Zentralbereich angeordnet ist. An dem Zentralbereich der beiden Arbeits- oder Pumpmembranen greift ein den Zentralbereich dieser Membranen abstützender gemeinsamer Stößel an, der diese wechselweise fördernden Membranen miteinander verbindet. Die Arbeits- oder Pumpmembranen der vorbekannten druckluftbetriebenen DoppelMembranpumpe sind nicht weiter mit einem Hubantrieb verbunden, weshalb auch die Zentralzone dieser vorbekannten Membrane keinen Membrananker umschließt. Auch ist während der druckluftgesteuerten Hubbewegung dieser Membranen kein Abwälzen der Membranen am Pumpenkopf zu erwarten. Und schließlich geht die bogenförmig gewölbte Ringzone unmittelbar in den zentralen Membranbereich über, ohne dass eine abweichend ausgestaltete Ringzone zu erkennen wäre.

Es besteht die Aufgabe, eine Membranpumpe der eingangs erwähnten Art zu schaffen, die sich durch einen leisen und schwingungsarmen Pumpbetrieb auszeichnet und mit der sich eine Geräuschreduktion während des Betriebs der Membranpumpe erreichen lässt.

Die erfindungsgemäße Lösung dieser Aufgabe besteht bei der Membranpumpe der eingangs erwähnten Art darin, dass die Arbeits- oder Pumpmembrane mit dem ganzen Umfang ihrer Führungszone während der Hubbewegung der Arbeits- oder Pumpmembrane an einer komplementär geformten Ring- oder Stützzone des Pumpemkopfes abwälzt.

Die in der erfindungsgemäßen Membranpumpe verwendete Arbeits- oder Pumpmembrane weist mehrere Membranzonen auf, die jeweils auf eine bestimmte Zweckbestimmung ausgerichtet ist. So ist der am Außenumfang der Membrane gelegene Ringbereich als Einspannzone ausgestaltet, mit der die Membrane zwischen zwei Gehäuseteilen des Pumpengehäuses eingespannt und umfangsseitig dicht gehalten ist. Mit Hilfe dieser Einspannzone ist die Relativposition der Membrane und ihrer Membranzonen auf den Pumpenkopf: und seine an die Membranzonen angepasste Formgebung festgelegt. Die Einspannzone dient somit der Zentrierung und/oder Positionierung der Arbeits- oder Pumpmembrane in Bezug auf den Pumpenkopf. Darüber hinaus sorgt sie für eine gute Abdichtung des Arbeits- oder Förderraumes gegenüber dem beispielsweise in einem Kurbelraum befindlichen Hubantrieb.

An diese Einspannzone schließt sich zum Membranzentrum hin eine FÜHRUNGSZONE an, die in unbelastetem Zustand der Arbeits- oder Pumpmembrane derart konvex gewölbt ist, dass diese benachbart zur Einspannzone angeordnete Ringzone über die Einspannzone in den Arbeits- oder Förderraum vorsteht. Während der Hubbewegung der Arbeits- oder Pumpmembrane wälzt sich diese mit dem ganzen Umfang ihrer Führungszone an einer komplementär geformten Ring- oder STÜTZZONE des Pumpenkopfes ab. Dabei stützt sich die Membrane mit ihrer zur Führung der Membrane bestimmten Führungszone fortschreitend von außen nach innen an der Stützzone des Pumpenkopfes ab, so dass die zur Vergrößerung des Radius notwendigen Radialkräfte in der Arbeits- oder Pumpmembrane fortschreitend sicher und schwingungsfrei von der Stützzone aufgenommen werden. Durch die während der Hubbewegung vom Membran-Außenumfang in Richtung nach innen fortschreitende Anlehnung der Arbeits- oder Pumpmembrane an den Pumpenkopf wird
die lagegerechte Positionierung der miteinander korrespondierenden Zonen der Membrane einerseits und des Pumpenkopfes im Bereich des Arbeits- oder Förderraumes andererseits zusätzlich sichergestellt. Die konvexe Ausgestaltung der Führungszone führt in Kombination mit der angepassten Geometrie des Pumpenkopfes zu einer Versteifung der Arbeits- oder Pumpmembrane.

Durch die konvexe Ausprägung der Führungszone ist gewährleistet, dass sich dieser Bereich im Aufwärtshub zuerst an der Stützzone des Pumpenkopfes anlehnt und somit die schwingungsarme Membranführung übernimmt. Da bei den bislang üblichen Membranen mit der Hubbewegung und unter dem Einfluss von Vakuum und Druck auch ein Anschlagen dieses bisher unkontrollierten Bereiches stattfand und die Führungszone der erfindungsgemäßen Arbeits- oder Pumpmembrane sich nun sicher und schwingungsfrei und somit kontrolliert an den Pumpenkopf anlehnt, trägt die Führungszone somit wesentlich zur Geräuschreduktion bei. Die Stützzonengeometrie ist an die Geometrie der Führungszone oder Membrane angepasst, sodass Führungszone und Stützzone geometrisch eine konvexe beziehungsweise konkave Einheit bilden.

In einem zentralen Bereich der Membrane ist eine ZENTRALZONE vorgesehen, in der die Arbeits- oder Pumpmembrane einen Membrananker bereichsweise umschließt, welcher auf seiner, dem Arbeits- oder Förderraum des Pumpenkopfes abgewandten Seite mit einem Hubantrieb verbunden ist, der zur oszillierenden Hubbewegung der Arbeits- oder Pumpmembrane vorgesehen ist. Die Zentralzone dient damit zur Antriebsverbindung mit dem Hubantrieb und zur Einleitung des Hubes. Über den vorzugsweise als Stahlteil ausgestaltete und die Arbeits- oder Pumpmembrane in ihrer Zentralzone aussteifenden Membrananker ist die Membrane beispielsweise an einem Pleuel des Hubantriebes befestigt, so dass der vom Hubantrieb bewirkte . Hub in die Membrane eingeleitet werden kann. Die Zentralzone ist gleichzeitig zum Ansaugen und Verdichten bestimmt. Hier findet maßgeblich die Volumenänderung zum Ansaugen und Verdichten statt.

Zwischen der Führungszone und der Zentralzone ist eine in unbelastetem Zustand demgegenüber konkav und in Richtung zum Hubantrieb gewölbte AUSGLEICHSZONE der Arbeits- oder Pumpmembrane vorgesehen. Die in der Hubmittellage und somit in unbelastetem Zustand in Richtung zum unteren Totpunkt durchgebogene AUSGLEICHSZONE erfährt beim Aufwärtshub eine Streckung, so dass die Ausgleichszone im oberen Totpunkt straff gespannt ist. Da die Ausgleichszone während des Aufwärtshubes der Membrane somit einen größeren Hub gestattet, bewirkt die Ausgleichszone gleichzeitig auch eine Spannungsreduzierung bei großem Hub. Da diese besondere Ausgestaltung der erfindungsgemäß verwendeten Arbeits- oder Pumpmembrane eine sichere und schwingungsarme Bewegung der Membrane während der Hubbewegung sicherstellt, begünstigt sie einen wesentlich geräuschärmeren Betrieb der erfindungsgemäßen Membranpumpe. Da die erfindungsgemäße Membranpumpe auch einen größeren Hub des Hubantriebes erlaubt und die erfindungsgemäß verwendete Arbeits- oder Pumpmembrane eine vergleichsweise großflächige aussteifende Zentralzone im Vergleich zu herkömmlichen Membranen haben kann, die die gewählte Form der Membrane unabhängig von den auf die Membrane einwirkenden Druckverhältnissen sicherstellt, zeichnet sich die erfindungsgemäße Membranpumpe auch durch eine höhere Leistungsfähigkeit und ein größeres Saugvermögen aus.

Da die Führungszone eine kontrollierte Bewegung der Membrane während der Hubbewegung sicherstellt und da die Ausgleichszone auch einen großen Hub zulässt, kann die Zentralzone vergleichsweise groß und derart massiv ausgestaltet werden, dass die Membrane in diesem Bereich praktisch hubkolbenartig wirksam ist und die Arbeits- oder Pumpmembrane der erfindungsgemäßen Membranpumpe unabhängig von den auf sie einwirkenden Druckkräften stets die definierte Form einhält, wodurch auch ein hoher Enddruck erreichbar ist. Dies ergibt auch bei ansteigendem Druck eine günstige und somit bessere Förderleistungskurve. Eine bevorzugte Ausführungsform gemäß der Erfindung sieht daher vor, dass der Membrananker sich im Vergleich zu den Führungs- und Ausgleichszonen über mehr als die Hälfte des Durchmessers des den Arbeits- oder Pumpraum umgrenzenden und von Führungs-, Ausgleichs- und Zentralzone gebildeten Membran-Teilbereiches erstreckt.

Vorteilhaft ist es, wenn der Membrananker in einem zum Hubantrieb hin offenen Sackloch oder dergleichen Aufnahmehöhlung in der Zentralzone in der Arbeits- oder Pumpmembrane angeordnet und/oder darin einvulkanisiert ist.

Eine bevorzugte Weiterbildung gemäß der Erfindung, die den geräuscharmen Lauf der erfindungsgemäßen Membranpumpe noch zusätzlich begünstigt, sieht vor, dass die Zentralzone im oberen Totpunkt der Arbeits- oder Pumpmembrane von einer benachbarten und an die Zentralzone formangepassten Anpassungszone des Pumpenkopfteiles beabstandet ist. Im oberen Totpunkt legt sich die Arbeits- oder Pumpmembrane somit nicht an den Pumpenkopf an, da dies zu einem Schlaggeräusch der Membrane am Pumpenkopf führen würde. Da die der Zentralzone der Membrane benachbarte ANPASSUNGSZONE im Pumpenkopf an die im oberen Totpunkt gedehnte Membrangeometrie der Ausgleichszone und an die starre Zentralzone formangepasst ist, wird ein minimaler schädlicher Raum gewährleistet. Bei der Anpassungszone nähern sich im Aufwärtshub die Ausgleichszone und die Zentralzone der Membrane an.

Bevorzugt wird eine Ausführungsform, bei der die Zentralzone in unbelastetem Zustand der Arbeits- oder Pumpmembrane über deren Führungszone hinaus in den Arbeits- oder Pumpraum vorsteht.

Damit der Pumpeneinlass möglichst frühzeitig durch die Arbeits- oder Pumpmembrane geschlossen wird, ist es vorteilhaft, wenn das Pumpenkopfteil zumindest eine Einlassöffnung hat, die dort benachbart zu der zwischen Führungszone und Ausgleichszone vorgesehenen Ringzone der Arbeits- oder Pumpmembrane angeordnet ist.

Damit der Pumpenauslass möglichst spät vor Erreichen des oberen Totpunktes schließt, wird eine Ausführungsform bevorzugt, bei der das Pumpenkopfteil wenigstens eine Auslassöffnung hat, die dort benachbart zu der Zentralzone der Arbeits- oder Pumpmembrane angeordnet ist.

Um die während des Aufwärtshubes der Membrane fortschreitend sichere und schwingungsarme Führung der Membrane zu begünstigen, ist es zweckmäßig, wenn die Führungszone während des Aufwärtshubes der Arbeits- oder Pumpmembrane form- und/oder reibschlüssig an der Stützzone des Pumpenkopfteiles anliegt.

Die besondere Ausgestaltung der Arbeits- oder Pumpmembrane und die darauf abgestimmte Ausgestaltung des Pumpenkopfes erlaubt es, die erfindungsgemäße Membranpumpe sowohl als Saug- oder Vakuumpumpe als auch als Druckpumpe oder Verdichter zu verwenden. Um die erfindungsgemäße Membranpumpe auch im Druckbereich optimal einsetzen zu können, ist eine Membranunterstützung hilfreich, die in ihrem äußeren Umfangsrandbereich an den Kippwinkel der Membrane angepasst sein sollte. Eine Weiterbildung gemäß der Erfindung, die sich zur Realisierung bei einer Druckpumpe oder einem Verdichter anbietet, sieht daher vor, dass die Arbeits- oder Pumpmembrane in der über die Zentralzone radial überstehenden Ringzone durch einen Membranteller abgestützt ist, der auf der dem Arbeits- oder Pumpraum abgewandten Seite der Arbeits- oder Pumpmembrane angeordnet ist.

Weiterbildungen gemäß der Erfindung ergeben sich aus der nachfolgenden Beschreibung in Verbindung mit den Zeichnungen. Nachstehend wir die Erfindung anhand bevorzugter Ausführungsbeispiele noch näher beschrieben.

Es zeigt:
- Fig. 1: eine in einem Längsschnitt gezeigte Membranpumpe mit einer Arbeits- oder Pumpmembrane, die sich in einer Hubmittellage und somit in einem unbelasteten Zustand befindet,
- Fig. 2: die Membranpumpe aus Fig. 1 in einem Detail-Längsschnitt im Bereich der einen Arbeits- oder Förderraum begrenzenden Arbeits- oder Pumpmembrane,
- Fig. 3: eine mit Fig. 1 und 2 vergleichbare Membranpumpe, die in einem Detaillängsschnitt im Bereich ihrer sich hier im oberen Totpunkt befindlichen Arbeit-s- oder Pumpmembrane dargestellt ist, wobei die Arbeits- oder Pumpmembrane der hier als Druckpumpe oder als Verdichter verwendeten Membranpumpe in der über die Zentralzone radial überstehenden Ringzone durch einen Membranteller abgestützt ist,
- Fig. 4: einen Detaillängsschnitt durch die Arbeits- oder Pumpmembrane, wobei die verschiedenen Membranzonen dieser Arbeits- oder Pumpmembrane markiert sind, und
- Fig. 5: einen Detaillängsschnitt durch die Membranpumpe gemäß den Figuren 1 bis 3 im Bereich der zwischen zwei Gehäuseteilen eingespannten Einspannzone der Arbeits- oder Pumpmembrane.

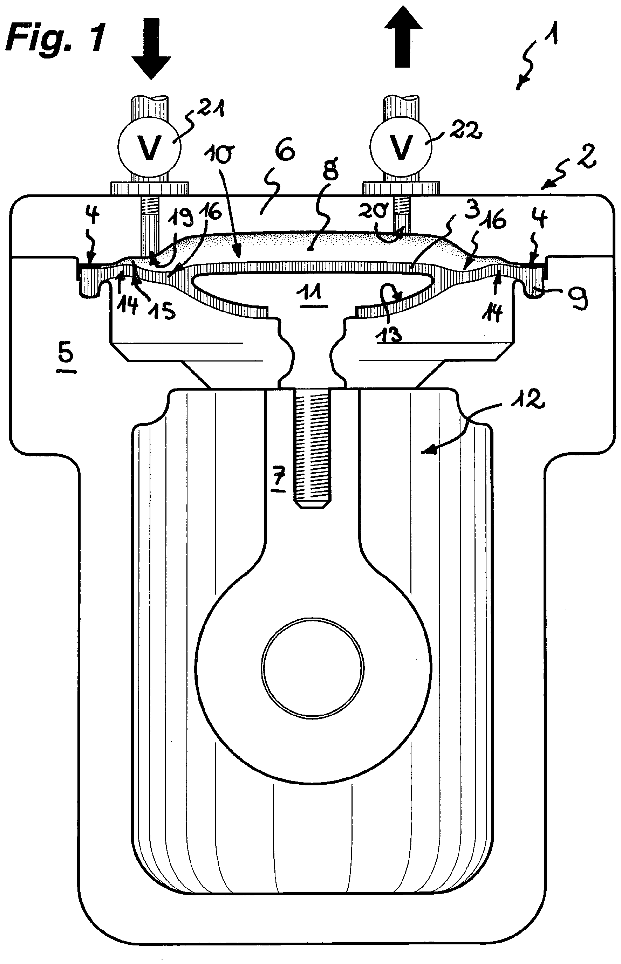

In Figur 1 ist eine Membranpumpe 1 in einem Längsschnitt dargestellt, die in ihrem Pumpenkopf 2 eine Arbeits- oder Pumpmembrane 3 hat. Die Arbeits- oder Pumpmembrane 3 weist an ihrem Außenumfang eine Einspannzone 4 auf, die zwischen zwei Gehäuseteilen 5, 6 eines Pumpengehäuses eingespannt ist. Diese Arbeits- oder Pumpmembrane 3 umgrenzt zwischen sich und dem als Pumpenkopfteil dienenden Gehäuseteil 6 einen Arbeits- oder Förderraum 8.

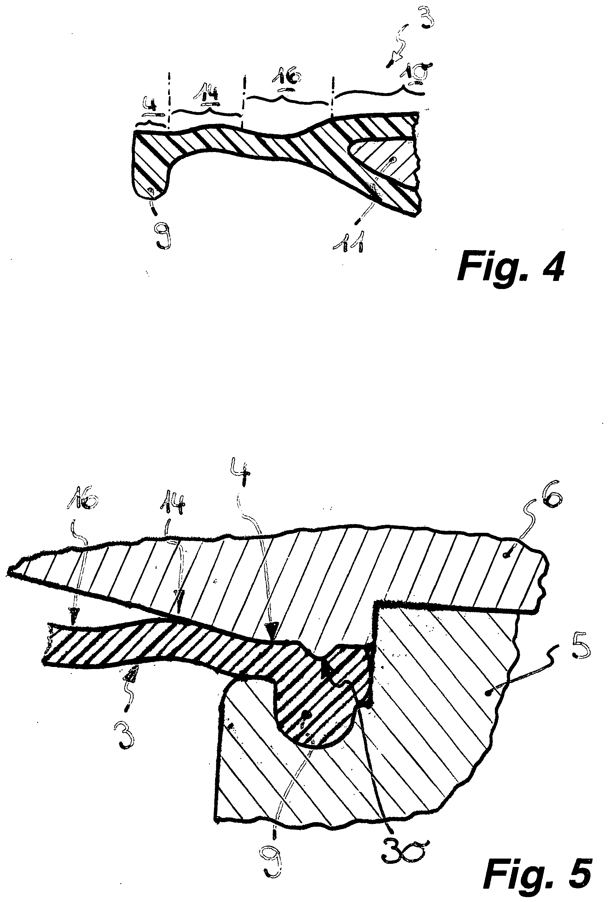

Die Arbeits- oder Pumpmembrane 3 weist im Bereich ihrer in Fig. 5 in einem Detaillängsschnitt noch näher dargestellten Einspannzone 4 eine O-Ring-artige Ausformung auf, die zur Positionierung der Membrane 3 mit einer komplementären Einformung in dem den Pumpenkopf abgewandten Gehäuseteil 5 der die Einspannzone zwischen sich einspannenden Gehäuseteile 5, 6 eingreift. Mit Hilfe der Einspannzone 4 ist die Relativposition der Membrane 3 und ihrer Membranzonen in Bezug auf den Pumpenkopf 2 und seine an die Membranzonen angepasste Formgebung festgelegt. Die Einspannzone 4 dient somit der Zentrierung und/oder Positionierung der Membrane 3 in Bezug auf den Pumpenkopf 2. Darüber hinaus sorgt die Einspannzone 4 für eine gute Abdichtung des Arbeits- oder Förderraumes 8 gegenüber dem Kurbelraum.

Die O-ringartige. Ausformung im Bereich der Einspannzone 4 ist hier als außenliegender Ringwulst 9 ausgebildet, der in einer Aussparung im Gehäuseteil 5 sicher und fest gehalten ist. Die Einspannzone 4 dichtet - gegebenenfalls auch in Kombination mit zumindest einer, am Gehäuseteil 5 und/oder am Gehäuseteil 6 vorstehenden und vorzugsweise umlaufenden Dichtkante - den Arbeits- oder Förderraum 8 nach außen hin ab. Bei dem in Figur 5 dargestellten Ausführungsbeispiel ist diese, als ringförmig umlaufender Vorsprung ausgebildete Dichtkante 30 am Gehäuseteil 6 vorgesehen und dort so angeordnet, dass die Membrane 3 über ihre Einspannzone 4 mit einer hohen Anpresskraft in die Aussparung im Gehäuseteil 5 gepresst wird. Die Einspannzone 4 der Arbeits- oder Pumpmembrane 3 dient somit zum Befestigen der Membrane 3 im Gehäuse und zur Abdichtung des Arbeits- oder Förderraums 8 gegenüber dem Gehäuse und der Umwelt.

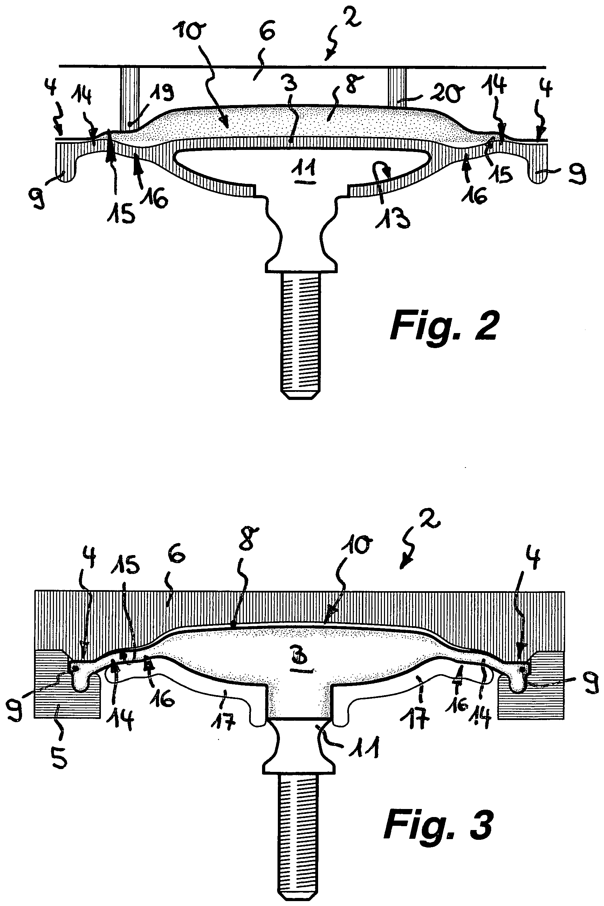

Wie aus Figur 1 und dem Detail-Längsschnitt in Figur 2 deutlich wird, hat die Arbeits- oder Pumpmembrane 3 eine Zentralzone 10, mit der die Membrane 3 einen im Wesentlichen pilzförmigen Membrananker 11 bereichsweise umschließt. Dieser Membrananker 11, der auf seiner dem Arbeits- oder Förderraum 8 abgewandten Seite mit einem Hubantrieb 12 verbunden ist, ist in einem zum Hubantrieb 12 hin offenen und in der Zentralzone 10 der Membrane 3 vorgesehenen Sackloch 13 angeordnet und einvulkanisiert. Zum Arbeits- oder Förderraum 8 hin sorgt die Membrane 3 für eine geschlossene Abdichtung, so dass die Membranpumpe sich auch durch eine hohe Gassichtigkeit im Zentralbereich auszeichnet. Der Hubantrieb 12 ist hier als Kurbeltrieb ausgestaltet, der über ein Pleuel 7 mit dem Membrananker 11 verbunden ist. Der Hubmittelpunkt muss soviel unter der Kurbeltriebachse liegen, wie zur Spannung der Ausgleichszone der Membrane 3 im oberen Totpunkt erforderlich ist.

Die benachbart zur Einspannzone 4 angeordnete Ringzone ist als eine in unbelastetem Zustand der Arbeits- oder Pumpmembrane 3 konvex gewölbte und über die Einspannzone 4 in den Arbeits- oder Förderraum 8 vorstehende Führungszone 14 ausgebildet, mit der sich die Arbeits- oder Druckmembrane 3 während der Hubbewegung der Membrane 3 an einer komplementär geformten Ring- oder Stützzone 15 im Pumpenkopfteil 6 abwälzt.

Während der Hubbewegung wälzt sich die Arbeits- oder Pumpmembrane 3 an der komplementär geformten Ring- oder Stützzone 15 des Pumpenkopfes 2 ab. Dabei stützt sich die Membrane 3 mit ihrer zur Führung der Membrane 3 bestimmten Führungszone 14 fortschreitend von außen nach innen an der Stützzone 15 des Pumpenkopfteiles 6 ab, so dass die zur Vergrößerung des Radius notwendigen Radialkräfte in der Arbeits- oder Pumpmembrane 3 fortschreitend sicher und schwingungsfrei von der Stützzone 15 aufgenommen werden. Die konvexe Ausgestaltung der Führungszone 14 führt in Kombination mit der angepassten Geometrie des Pumpenkopfes 6 zu einer Versteifung der Arbeits- oder Pumpmembrane 3. Durch die konvexe Ausprägung der Führungszone 14 ist gewährleistet, dass sich dieser Bereich im Aufwärtshub zuerst an der Stützzone 15 des Pumpenkopfes 2 anlehnt und somit die schwingungsarme Membranführung übernimmt. Da bei den bislang üblichen Membranen mit der Hubbewegung und unter dem Einfluss von Vakuum und Druck auch ein Anschlagen dieses bisher unkontrollierten Bereiches stattfand und die Führungszone 14 der hier dargestellten Arbeits- oder Pumpmembrane 3 sich nun sicher und schwingungsfrei und somit kontrolliert an den Pumpenkopf 2 anlehnt, trägt die Führungszone 14 somit wesentlich zur Geräuschreduktion bei. Da die Führungszone 14 während des Aufwärtshubes der Arbeits- oder Pumpmembrane 3 sich form- und reibschlüssig sowie fortschreitend von außen nach innen an die Stützzone 15 des Pumpenkopfteiles 6 anlegt, wird die Membrane 3 während des Aufwärtshubes an der Stützzone 15 des Pumpenkopfteiles 6 in radialer Richtung gehalten und geradezu fest verankert. Diese genau definierte und schwingungsarme Membranführung trägt zu einer erheblichen Geräuschreduktion während des Betriebs der Membranpumpe 1 bei.

Zwischen der Führungszone 14 und der Zentralzone 10 ist eine in unbelastetem Zustand demgegenüber konkav und in Richtung zum Hubantrieb 12 gewölbte Ausgleichszone 16 der Arbeits- oder Pumpmembrane 3 vorgesehen. Die in der Hubmittellage und somit in unbelastetem Zustand in Richtung zum unteren Totpunkt durchgebogene Ausgleichszone 16 erfährt beim Aufwärtshub eine Streckung, so dass die Ausgleichszone 16 im oberen Totpunkt straff gespannt ist. Da die Ausgleichszone 16 während des Aufwärtshubes der Membrane somit einen größeren Hub gestattet, bewirkt die Ausgleichszone 16 gleichzeitig auch eine Spannungsreduzierung in der Membrane 3 bei großem Hub. Die Ausgleichszone 16 erlaubt eine Erhöhung des Membranhubes bei gleichen äußeren Abmessungen der Membrane und reduziert die Membranspannungen, was sich positiv auf die Lebensdauer auswirkt. Ein Überzug der Membrane 3 mit Teflon oder anderen Werkstoffen als Schutz vor aggressiven Medien ist möglich, wobei die Ausgleichszone 16 speziell bei diesen Ausführungen einen größeren Hub zulässt.

Aus den Fig. 1 und 2 wird deutlich, dass im Pumpenkopfteil 6 zumindest eine Einlassöffnung 19 vorgesehen ist, die dort benachbart zu der zwischen Führungszone 14 und Ausgleichszone 16 vorgesehenen Ringzone der Arbeits- oder Pumpmembrane 3 angeordnet ist. Der Einlassöffnung 19 ist in Einströmrichtung ein Einlassventil 21 vorgeschaltet. Das Pumpenkopfteil 6 weist auch wenigstens eine Auslassöffnung 20 auf, die dort benachbart zu der Zentralzone 10 der Arbeits- oder Pumpmembrane 3 angeordnet ist. Der Auslassöffnung 20 ist in Ausströmrichtung ein Auslassventil 22 nachgeschaltet.

Aus den Figuren 1, 2 und 4 wird deutlich, dass das dem Membrananker 11 beidseits umhüllende gummielastische Material der Arbeits- oder Pumpmembrane 3 auf beiden Seiten des Membranankers 11 etwa die gleiche Material- oder Schichtdicke hat.

Wie in dem Detaillängsschnitt durch die Arbeits- oder Pumpmembrane 3 in Fig. 4 deutlich wird, weist die Membrane 3 an ihrem Membran-Außenumfang die Einspannzone 4 auf, an die sich in Richtung nach innen die Führungszone 14, die Ausgleichszone 16 und im Zentrum der Membrane 3 die Zentralzone 10 anschließt. Aus Fig. 4 wird auch deutlich, dass die Führungszone 4 in unbelastetem Zustand der Arbeits- oder Pumpmembrane 3 zumindest über den an die Führungszone 4 angrenzenden Randbereich der Einspannzone 3 in den Arbeits- oder Förderraum 8 vorsteht.

Die mit der Zonenmembrane 3 ausgestattete Membranpumpe 1 zeichnet sich dadurch aus, dass die Kombination aus Endvakuum, Enddruck, Baugröße, Förderleistung, Dichtigkeit und Membranlebensdauer neue Bestwerte erreicht.

In Fig. 3 ist eine als Druckpumpe oder als Verdichter ausgebildete Membranpumpe 1 im Bereich ihres Arbeits- oder Förderraumes 2 dargestellt. Die Membranpumpe 1 in Fig. 3 weist eine gemäß den Fig. 1 und 2 ausgebildete Arbeits- oder Pumpmembrane 3 auf. Aus Fig. 3 wird deutlich, dass die besondere Ausgestaltung der Arbeits- oder Pumpmembrane 3 und die darauf abgestimmte Ausgestaltung des Pumpenkopfes 2 es erlaubt, die Arbeits- oder Pumpmembrane sowohl als Saug- oder Vakuumpumpe als auch als Druckpumpe oder Verdichter zu verwenden. Bei der in Fig. 3 dargestellten und als Druckpumpe oder als Verdichter verwendeten Membranpumpe 1 ist eine Membranunterstützung vorgesehen, die hier als ein die Arbeits- oder Pumpmembrane 3 in der über die Zentralzone 10 radial überstehenden Ringzone abstützender Membranteller 17 ausgebildet ist, der auf der dem Arbeits- oder Pumpraum abgewandten Seite der Arbeits- oder Pumpenmembrane angeordnet ist. Dieser Membranteller 17 legt sich in dem in Fig. 3 dargestellten oberen Totpunkt flächig an die Unterseite der Arbeits- oder Pumpmembrane 3 an, so dass diese sich auch durch hohe Druckunterschiede auf den gegenüberliegenden Membranseiten nicht leistungsmindernd verformen kann. Der Membranteller 17 ist an seinem äußeren Umfangsrandbereich in Richtung zum Hubantrieb derart abgewinkelt, dass der Membranteller 17 die Arbeits- oder Pumpmembrane 3 während der Hubbewegung nicht zusätzlich belastet.

## Patentansprüche

1. Membranpumpe (1), die in zumindest einem Pumpenkopf (2) eine Arbeits- oder Pumpmembrane (3) hat, welche mit einer an ihrem Außenumfang angeordneten Einspannzone (4) zwischen zwei Gehäuseteilen (5, 6) eines Pumpengehäuses eingespannt ist und zwischen sich und einem Pumpenkopfteil (6) einen Arbeits- oder Förderraum (8) umgrenzt, deren benachbart zur Einspannzone (4) angeordnete Ringzone als eine in unbelastetem Zustand der Arbeits- oder Pumpmembrane konvex gewölbte und in den Arbeits- oder Förderraum (8) vorstehende Führungszone (14) ausgebildet ist, und die in einer Zentralzone (10) einen Membrananker (11) umschließt, welcher auf seiner, dem Arbeits- oder Förderraum (8) des zumindest einen Pumpenkopfes (2) abgewandten Seite mit einem Hubantrieb (12) verbunden ist, der zur oszillierenden Hubbewegung der Arbeits- oder Pumpmembrane (3) vorgesehen ist, wobei sich die Arbeits- oder Pumpmembrane (3) mit ihrer Führungszone (14) während der Hubbewegung der Arbeits- oder Pumpmembrane (3) an einer komplementär geformten Ring- oder Stützzone (15) des Pumpenkopfes (2) abwälzt, wobei zwischen der Führungszone (14) und der Zentralzone (10) eine in unbelastetem Zustand demgegenüber konkav und in Richtung zum unteren Totpunkt durchgebogene Ausgleichszone (16) der Arbeits- oder Pumpmembrane (3) vorgesehen ist, und wobei die Ausgleichszone beim Aufwärtshub eine Streckung erfährt, sodass die Ausgleichszone im oberen Totpunkt straff gespannt ist, **dadurch gekennzeichnet, dass** die Arbeits- oder Pumpmembrane (3) mit dem ganzen Umfang ihrer Führungszone (14) während der Hubbewegung der Arbeits- oder Pumpmembrane (3) an einer komplementär geformten Ring- oder Stützzone (15) des Pumpenkopfes (2) abwälzt.

2. Membranpumpe nach Anspruch 1, **dadurch gekennzeichnet, dass** der Membrananker (11) sich im Vergleich zu den Führungs- und Ausgleichszonen (14, 16) über mehr als die Hälfte des Durchmessers des den Arbeits- oder Förderraum (8) umgrenzenden und von Führungs- (14), Ausgleichs- (16) und Zentralzone (10) gebildeten Membranteilbereichs erstreckt.

3. Membranpumpe nach Anspruch 1 oder 2, **dadurch gekennzeichnet, dass** die Arbeits- oder Pumpmembrane (3) im Bereich ihrer Einspannzone (4) zumindest eine Positionierein- und/oder -ausformung hat, die zur Positionierung der Arbeits- oder Pumpmembrane (3) mit einer komplementären Aus- und/oder Einformung in zumindest einem der die Arbeits- oder Pumpmembrane (3) zwischen sich einspannenden Gehäuseteilen (5, 6) zusammenwirkt.

4. Membranpumpenach einem der Ansprüche 1 bis 3, **dadurch gekennzeichnet, dass** an die Arbeits- oder Pumpmembrane (3) zumindest eine O-Ring-artige Positionierausformung einstückig angeformt ist.

5. Membranpumpe nach einem der Ansprüche 1 bis 4, **dadurch gekennzeichnet, dass** der Membrananker (11) in einem zum Hubantrieb (12) hin offenen Sackloch (13) oder dergleichen Aufnahmehöhlung in der Zentralzone (10) der Arbeits- oder Pumpmembrane (3) angeordnet und/oder darin einvulkanisiert ist.

6. Membranpumpe nach einem der Ansprüche 1 bis 5, **dadurch gekennzeichnet, dass** die Zentralzone (10) im oberen Totpunkt der Arbeits- oder Pumpmembrane (3) von einer benachbarten und an die Zentralzone (10) formangepassten Anpassungszone (18) des Pumpenkopfteiles (6) beabstandet ist.

7. Membranpumpe nach einem der Ansprüche 1 bis 6, **dadurch gekennzeichnet, dass** die Zentralzone (10) in unbelastetem Zustand der Arbeits- oder Pumpmembrane (3) über deren Führungszone (14) hinaus in den Arbeits- oder Pumpraum (3) vorsteht.

8. Membranpumpe nach einem der Ansprüche 1 bis 7, **dadurch gekennzeichnet, dass** das Pumpenkopfteil (6) zumindest eine Einlassöffnung (19) hat, die dort benachbart zu der zwischen Führungszone (14) und Ausgleichszone (16) vorgesehenen Ringzone der Arbeits- oder Pumpenmembrane angeordnet ist.

9. Membranpumpe nach einem der Ansprüche 1 bis 8, **dadurch gekennzeichnet, dass** das Pumpenkopfteil (6) wenigstens eine Auslassöffnung (20) hat, die dort benachbart zu der Zentralzone (10) der Arbeits- oder Pumpmembrane (3) angeordnet ist.

10. Membranpumpe nach einem der Ansprüche 1 bis 9, **dadurch gekennzeichnet, dass** die Führungszone: (10) während des Aufwärtshubes der Arbeits- oder Pumpmembrane (3) form- und/oder reibschlüssig und vorzugsweise fortschreitend von außen nach innen an der Stützzone (15) des Pumpenkopfteiles (6) anliegt.

11. Membranpumpe nach einem der Ansprüche 1 bis 10, **dadurch gekennzeichnet, dass** die Arbeits- oder Pumpmembrane (3) in der über die Zentralzone (10) radial überstehenden Ringzone durch einen Membranteller (17) abgestützt ist, der auf der dem Arbeits- oder Förderraum (8) abgewandten Seite der Arbeits- oder Pumpmembrane (3) angeordnet ist.

## Claims

1. Diaphragm pump (1) which has a working or pump diaphragm (3) in at least one pump head (2), said working or pump diaphragm being clamped with a clamping zone (4), which is arranged on the outer circumference thereof, between two housing parts (5, 6) of a pump housing and defining a working or delivery space (8) between itself and a pump head part (6), the annular zone of said working or pump diaphragm which is arranged adjacent to the clamping zone (4) being configured as a guide zone (14) which, in the unloaded state of the working or pump diaphragm, is convexly curved and projects into the working or delivery space (8), and which encloses, in a central zone (10), a diaphragm armature (11) which, on the side thereof remote from the working or delivery space (8) of the at least one pump head (2), is connected to a reciprocating drive (12) which is provided for oscillating reciprocating movement of the working or pump diaphragm (3), wherein the working or pump diaphragm (3) rolls with its guide zone (14) during the reciprocating movement of the working or diaphragm pump (3) on a complementarily formed annular or supporting zone (15) of the pump head (2), wherein a compensation zone (16) of the working or pump diaphragm (3) is provided between the guide zone (14) and the central zone (10), said compensation zone being, in the unloaded state, flexed concavely with respect thereto and in the direction towards the bottom dead centre, and wherein the compensation zone experiences stretching during an upward stroke so that the compensation zone is pulled taut at the top dead centre, **characterised in that** the working or pump diaphragm (3) rolls with the entire periphery of its guide zone (14) during the reciprocating movement of the working or pump diaphragm (3) on a complementarily formed annular or supporting zone (15) of the pump head (2).

2. Diaphragm pump as claimed in claim 1, **characterised, in that** in comparison with the guide and compensation zones (14, 16), the diaphragm armature (11) extends over more than half the diameter of the diaphragm part region which defines the working or delivery space (8) and is formed by the guide zone (14), compensation zone (16) and central zone (10).

3. Diaphragm pump as claimed in claim 1 or 2, **characterised in that** the working or pump diaphragm (3) has, in the region of its clamping zone (4), at least one positioning recess and/or projection which, in order to position the working or pump diaphragm (3), cooperates with a complementary projection and/or recess in at least one of the housing parts (5, 6) which clamp the working or pump diaphragm (3) therebetween.

4. Diaphragm pump as claimed in any one of claims 1 to 3, **characterised in that** at least one O-ring-like positioning projection is formed integrally onto the working or pump diaphragm (3).

5. Diaphragm pump as claimed in any one of claims 1 to 4, **characterised in that** the diaphragm armature (11) is arranged in and/or vulcanised into a blind hole (13), which is open towards the reciprocating drive (12), or similar receiving cavity in the central zone (10) of the working or pump diaphragm (3).

6. Diaphragm pump as claimed in any one of claims 1 to 5, **characterised in that** at the top dead centre of the working or pump diaphragm (3), the central zone (10) is spaced apart from an adjacent adaptation zone (18) of the pump head part (6), said adaptation zone having a shape adapted to the central zone (10).

7. Diaphragm pump as claimed in any one of claims 1 to 6, **characterised in that** in the unloaded state of the working or pump diaphragm (3), the central zone (10) projects beyond the guide zone (14) of said working or pump diaphragm into the working or pump space (3).

8. Diaphragm pump as claimed in any one of claims 1 to 7, **characterised in that** the pump head part (6) has at least one inlet opening (19) which is arranged at that location adjacent to the annular zone of the working or pump diaphragm, said annular zone being provided between the guide zone (14) and compensation zone (16).

9. Diaphragm pump as claimed in any one of claims 1 to 8, **characterised in that** the pump head part (6) has at least one outlet opening (20) which is arranged at that location adjacent to the central zone (10) of the working or pump diaphragm (3).

10. Diaphragm pump as claimed in any one of claims 1 to 9, **characterised in that** during the upward stroke of the working or pump diaphragm (3), the guide zone (10) lies against the supporting zone (15) of the pump head part (6) in a form-fitting and/or frictionally engaged manner and preferably progressively from the outside inwards.

11. Diaphragm pump as claimed in any one of claims 1 to 10, **characterised in that** the working or pump diaphragm (3) is supported by a diaphragm plate (17) in the annular zone which projects radially beyond the central zone (10), said diaphragm plate being arranged on the side of the working or pump diaphragm (3) remote from the working or delivery space (8).

## Revendications

1. Pompe à membrane (1), qui comporte dans au moins une tête de pompe (2), une membrane de travail ou de pompe (3), qui est serrée avec une zone de serrage (4) disposée à sa périphérie extérieure entre deux parties de boîtier (5, 6) d'un boîtier de pompe et qui délimite entre elle et une partie (6) de la tête de pompe une chambre de travail ou de transport (8), dont la zone annulaire disposée à proximité de la zone de serrage (4) est réalisée sous la forme d'une zone de guidage (14) à courbure convexe et saillante dans la chambre de travail ou de transport (8) dans l'état non chargé de la membrane de travail ou de pompe, et qui entoure dans une zone centrale (10) un ancrage de membrane (11) qui, sur son côté situé à l'opposé de la chambre de travail ou de transport (8) de ladite au moins une tête de pompe (2), est relié à un entraînement de levage (12) qui est prévu pour le mouvement de levage oscillant de la membrane de travail ou de pompe (3), dans laquelle la membrane de travail ou de pompe (3) roule avec sa zone de guidage (14) pendant le mouvement de levage de la membrane de travail ou de pompe (3) sur une zone annulaire ou d'appui (15) de forme complémentaire de la tête de pompe (2), dans laquelle il est prévu entre la zone de guidage (14) et la zone centrale (10) une zone d'équilibrage (16) de la membrane de travail ou de pompe (3) à courbure au contraire concave dans l'état non chargé et incurvée en direction du point mort bas, et dans laquelle la zone d'équilibrage subit une extension lors de la course ascendante, de telle manière que la zone d'équilibrage soit serrée de façon tendue au point mort haut, **caractérisée en ce que** la membrane de travail ou de pompe (3) roule avec toute la périphérie de sa zone de guidage (14) pendant le mouvement de levage de la membrane de travail ou de pompe (3) sur une zone annulaire ou d'appui (15) de forme complémentaire de la tête de pompe (2).

2. Pompe à membrane selon la revendication 1, **caractérisée en ce que** l'ancrage de membrane (11) s'étend, par comparaison avec les zones de guidage et d'équilibrage (14, 16), sur plus de la moitié du diamètre de la région partielle de la membrane encerclant la chambre de travail ou de transport (8) et formée par la zone de guidage (14), la zone d'équilibrage (16) et la zone centrale (10).

3. Pompe à membrane selon la revendication 1 ou 2, **caractérisée en ce que** la membrane de travail ou de pompe (3) comporte dans la région de sa zone de serrage (4) au moins un enfoncement et/ou un renflement de positionnement qui, pour le positionnement de la membrane de travail ou de pompe (3), coopère avec un renflement et/ou un enfoncement complémentaire dans au moins une des parties de boîtier (5, 6) serrant entre elles la membrane de travail ou de pompe (3).

4. Pompe à membrane selon l'une quelconque des revendications 1 à 3, **caractérisé en ce qu'**au moins un renflement de positionnement de type joint torique est formé d'une seule pièce sur la membrane de travail ou de pompe (3).

5. Pompe à membrane selon l'une quelconque des revendications 1 à 4, **caractérisée en ce que** l'ancrage de membrane (11) est disposé dans un trou borgne ouvert vers l'entraînement de levage (12) ou dans une cavité de réception analogue dans la zone centrale (10) de la membrane de travail ou de pompe (3) et/ou est vulcanisé dans celle-là.

6. Pompe à membrane selon l'une quelconque des revendications 1 à 5, **caractérisée en ce que** la zone centrale (10) au point mort haut de la membrane de travail ou de pompe (3) est espacée d'une zone d'adaptation (18) de la partie de la tête de pompe (6) voisine et adaptée à la forme de la zone centrale (10).

7. Pompe à membrane selon l'une quelconque des revendications 1 à 6, **caractérisée en ce que** la zone centrale (10) dans l'état non chargé de la membrane de travail ou de pompe (3) est saillante au-delà de sa zone de guidage (14) dans la chambre de travail ou de pompe (3).

8. Pompe à membrane selon l'une quelconque des revendications 1 à 7, **caractérisée en ce que** la partie de tête de pompe (6) comporte au moins une ouverture d'entrée (19), qui y est disposée à proximité de la zone annulaire de la membrane de travail ou de pompe (3) prévue entre la zone de guidage (14) et la zone d'équilibrage (16).

9. Pompe à membrane selon l'une quelconque des revendications 1 à 8, **caractérisée en ce que** la partie de tête de pompe (6) comporte au moins une ouverture de sortie (20), qui y est disposée à proximité de la zone centrale (10) de la membrane de travail ou de pompe (3).

10. Pompe à membrane selon l'une quelconque des revendications 1 à 9, **caractérisée en ce que** la zone de guidage (10) s'applique pendant la course ascendante de la membrane de travail ou de pompe (3) par emboîtement et/ou par friction et, de préférence, en progressant de l'extérieur vers l'intérieur sur la zone d'appui (15) de la partie de tête de pompe (6).

11. Pompe à membrane selon l'une quelconque des revendications 1 à 10, **caractérisée en ce que** la membrane de travail ou de pompe (3) est soutenue dans la zone annulaire saillante radialement au-dessus de la zone centrale (10) par une rondelle de membrane (17), qui est disposée sur le côté de la membrane de travail ou de pompe (3) situé à l'opposé de la chambre de travail ou de transport (8).
